# EUROPEAN PATENT APPLICATION

(11) **EP 4 769 334 A1**
(43) Date of publication of application: **01.07.2026**
(21) Application number: 25221009.1
(22) Date of filing: 05.12.2025
(51) Int. Cl.: G06V 10/82, G06V 30/422

(54) **DETECTING AND LABELING SYMBOLS IN A TWO-DIMENSIONAL IMAGE USING ENCODINGS**

(30) Priority: 31.12.2024 US 202419007223
(71) Applicant: Trimble Inc, Westminster CO 80021 (US)
(72) Inventor: BANFIELD, Robert, Westminster, 80021 (US); WALTON, Paul, Richard, Westminster, 80021 (US); STUMP, Ross, Westminster, 80021 (US); THOMAS, William, James, Westminster, 80021 (US)
(74) Representative: AWA Sweden AB

(57) **Abstract**

Image data representing a two-dimensional image is received. Symbols are extracted from the image data using a detection service. The symbols are encoded into representation vectors, each representing distinct symbols. A labeled two-dimensional image is generated by (i) performing a comparison between a representation vector and representation vectors of symbols included in a library of known symbols, (ii) in accordance with determining that the corresponding representation vector exceeds a threshold similarity with a particular representation vector, applying a first label to the symbol, wherein the first label is a label of a first symbol that is represented by the particular representation vector, and (iii) in accordance with determining that the corresponding representation vector does not exceed the threshold similarity with representation vectors, applying a second label to the symbol. The labeled two-dimensional image is provided for facilitating a real-world operation involving the two-dimensional image.

## Description

### BACKGROUND

This disclosure relates in general to feature detection in two-dimensional files. The two-dimensional files can include blueprints or other suitable or similar two-dimensional files or images that can include various, and potentially unlimited, numbers of symbols. For example, a particular two-dimensional file can include a construction blueprint that can include different symbols for different plumbing features, different electrical features, etc. There may be many, such as thousands or more, different types of symbols in the particular two-dimensional file. Determining a precise number of each different type of symbol in the particular two-dimensional file may be difficult, or even impossible in the case of manual inspection. Additionally, training a computer service or machine-learning model to recognize and track each type of symbol can be difficult or even impossible.

### SUMMARY

In certain embodiments, a method for detecting and labeling symbols using encoding comprises: receiving image data representing a two-dimensional image; extracting, using a trained detection service, a set of symbols from the image data, wherein each symbol of the set of symbols is extracted for a distinct symbol included in the two-dimensional image; encoding the set of symbols to generate a set of representation vectors, wherein each representation vector of the set of representation vectors is an encoding of a different symbol of the set of symbols; generating a labeled two-dimensional image, wherein generating the labeled two-dimensional image includes, for each symbol of the set of symbols: (i) performing a comparison between a corresponding representation vector of the set of representation vectors and one or more representation vectors corresponding to one or more symbols included in a library of known symbols, (ii) in accordance with determining that the corresponding representation vector exceeds a threshold similarity with a particular representation vector of the one or more representation vectors, applying a first label to the symbol, wherein the first label is a label of a first symbol that is represented by the particular representation vector, and (iii) in accordance with determining that the corresponding representation vector does not exceed the threshold similarity with any representation vectors of the one or more representation vectors, applying a second label to the symbol, wherein the second label is provided by an entity associated with the two-dimensional image; and providing the labeled two-dimensional image for facilitating a real-world operation involving the two-dimensional image.

In an embodiment, encoding the set of symbols to generate the set of representation vectors includes, for each symbol of the set of symbols: (i) generating, using one or more supervised layers of a hybrid machine-learning model, features based on image data corresponding to the symbol, and (ii) generating, by using an unsupervised layer of the hybrid machine-learning model, a corresponding representation vector for the symbol by transforming the features into a predetermined number of numerical representations corresponding to the features. Additionally or alternatively, applying the second label to the symbol includes adjusting the library of known symbols to include an association between the second label and the corresponding representation vector of the symbol. Additionally or alternatively, the library of known symbols includes a partitioned, cloud-based library, wherein each partition of a set of partitions included in the cloud-based library corresponds to a different tenant of a set of tenants, wherein applying the second label to the symbol includes adjusting data within a particular partition of the set of partitions, and wherein the particular partition corresponds to a user associated with the two-dimensional image. Additionally or alternatively, providing the labeled two-dimensional image includes generating and outputting a graphical user interface that includes a list of labeled symbols and a count of each labeled symbol included in the list of labeled symbols, and wherein the graphical user interface includes one or more interactive elements that, when selected for a corresponding symbol of the list of labeled symbols, highlights each instance of the corresponding symbol in the labeled two-dimensional image.

In an embodiment, extracting the set of symbols from the image data includes generating a set of bounding boxes, wherein each bounding box of the set of bounding boxes corresponds with a different symbol of the set of symbols, and wherein each bounding box of the set of bounding boxes indicates a location of the different symbol within the two-dimensional image. Additionally or alternatively, encoding the set of symbols to generate the set of representation vectors includes, for each symbol of the set of symbols, using a corresponding bounding box of the set of bounding boxes, and location indicated thereby, to encode the symbol into a representation vector. Additionally or alternatively, extracting the set of symbols from the image data includes: (i) dividing the two-dimensional image into a set of sub-images that have a smaller resolution than the two-dimensional image, and (ii) applying the trained detection service to each sub-image of the set of sub-images to extract the set of symbols.

In certain embodiments, a system for detecting and labeling symbols using encoding comprises: a processing device; and a non-transitory computer-readable medium comprising instructions executable by the processing device to cause the processing device to perform operations comprising: receiving image data representing a two-dimensional image; extracting, using a trained detection service, a set of symbols from the image data, wherein each symbol of the set of symbols is extracted for a distinct symbol included in the two-dimensional image; encoding the set of symbols to generate a set of representation vectors, wherein each representation vector of the set of representation vectors is an encoding of a different symbol of the set of symbols; generating a labeled two-dimensional image, wherein generating the labeled two-dimensional image includes, for each symbol of the set of symbols: (i) performing a comparison between a corresponding representation vector of the set of representation vectors and one or more representation vectors corresponding to one or more symbols included in a library of known symbols, (ii) in accordance with determining that the corresponding representation vector exceeds a threshold similarity with a particular representation vector of the one or more representation vectors, applying a first label to the symbol, wherein the first label is a label of a first symbol that is represented by the particular representation vector, and (iii) in accordance with determining that the corresponding representation vector does not exceed the threshold similarity with any representation vectors of the one or more representation vectors, applying a second label to the symbol, wherein the second label is provided by an entity associated with the two-dimensional image; and providing the labeled two-dimensional image for facilitating a real-world operation involving the two-dimensional image.

In certain embodiments, a non-transitory computer-readable medium comprises instructions executable by a processing device for causing the processing device to perform various operations relating to detecting and labeling symbols using encoding. The operations can include: receiving image data representing a two-dimensional image; extracting, using a trained detection service, a set of symbols from the image data, wherein each symbol of the set of symbols is extracted for a distinct symbol included in the two-dimensional image; encoding the set of symbols to generate a set of representation vectors, wherein each representation vector of the set of representation vectors is an encoding of a different symbol of the set of symbols; generating a labeled two-dimensional image, wherein generating the labeled two-dimensional image includes, for each symbol of the set of symbols: (i) performing a comparison between a corresponding representation vector of the set of representation vectors and one or more representation vectors corresponding to one or more symbols included in a library of known symbols, (ii) in accordance with determining that the corresponding representation vector exceeds a threshold similarity with a particular representation vector of the one or more representation vectors, applying a first label to the symbol, wherein the first label is a label of a first symbol that is represented by the particular representation vector, and (iii) in accordance with determining that the corresponding representation vector does not exceed the threshold similarity with any representation vectors of the one or more representation vectors, applying a second label to the symbol, wherein the second label is provided by an entity associated with the two-dimensional image; and providing the labeled two-dimensional image for facilitating a real-world operation involving the two-dimensional image.

Further areas of applicability of the present disclosure will become apparent from the detailed description provided hereinafter. It should be understood that the detailed description and specific examples, while indicating various embodiments, are intended for purposes of illustration only and are not intended to limit the scope of the disclosure.

### BRIEF DESCRIPTION OF THE DRAWINGS

The present disclosure is described in conjunction with the appended figures.
FIG. 1 depicts an architecture of an embodiment of a hybrid machine-learning model for generating a representation vector for symbols.
FIG. 2 depicts a block diagram of an embodiment of a computer system that can be used to detect and label symbols with respect to a two-dimensional document.
FIG. 3 depicts a process flow for labeling a two-dimensional document using encoding.
FIG. 4 depicts a process flow for generating, using encodings, a labeled two-dimensional image based on a two-dimensional document with symbols.
FIG. 5 depicts a process flow for determining labels to apply to candidate symbols based on encodings and updating a library with the encodings.
FIG. 6 depicts an embodiment of a process for detecting and labeling symbols in a two-dimensional document using encoding.

In the appended figures, similar components and/or features may have the same reference label. Further, various components of the same type may be distinguished by following the reference label by a dash and a second label that distinguishes among the similar components. If only the first reference label is used in the specification, the description is applicable to any one of the similar components having the same first reference label irrespective of the second reference label.

### DETAILED DESCRIPTION

The ensuing description provides preferred exemplary embodiment(s) only and is not intended to limit the scope, applicability, or configuration of the disclosure. Rather, the ensuing description of the preferred exemplary embodiment(s) will provide those skilled in the art with an enabling description for implementing a preferred exemplary embodiment. It is understood that various changes may be made in the function and arrangement of elements without departing from the spirit and scope as set forth in the appended claims.

This disclosure, without limitation, relates to detecting and identifying symbols in a two-dimensional document using a segmented approach. The two-dimensional document may be or include a blueprint or other suitable two-dimensional document that can be digitized using image data and that may include symbols that may be non-standard. A non-standard symbol can include a hand-drawn symbol, a custom symbol made or used by a particular entity (and not by some other entities), or other types of non-standard symbols. The symbols can be represented via image data of the two-dimensional image. The segmented approach can involve (i) identifying candidate symbols in the image data of the two-dimensional document and (ii) labeling the candidate symbols. The identifying and labeling of the candidate labels can be performed separately in the segmented approach. That is, a first model at a first time can be used to identify the candidate labels, and a second model at a second time (e.g., after the identifying operation is complete) can be used to label the identified candidate symbols. In this way, encodings can be used to enhance accuracy of labels for the candidate symbols in the two-dimensional document. In some examples, the encodings can be or include representational vectors that are generated to represent corresponding symbols in the two-dimensional document.

In some embodiments, a two-dimensional document can be generated with a set of symbols. There can be many, such as more than 100, more than 1000, more than 10,000, or more, symbols, many types of symbols, or a combination thereof included in the two-dimensional document. In a particular example, the two-dimensional document can be or include a construction blueprint that can represent a request for constructing one or more buildings, and the blueprint can include many symbols and types of symbols that represent specific components, such as specific types of power outlets, specific types of plumbing equipment, etc., for constructing the one or more buildings. Acquiring the correct number and type of components for constructing the building can be important since, if incorrect numbers are acquired, the one or more buildings, then the one or more buildings may not be able to be constructed, the one or more buildings may be constructed improperly, the project may be delayed or involve excessive numbers of resources, etc. Other systems may not use a segmented approach for identifying and labeling the symbols, and the other systems may (i) incorrectly identify or label the symbols, (ii) may take excessive time or computing resources to identify or label the symbols, etc.

A system that uses a segmented approach for identifying and labeling symbols in a two-dimensional document can address the above-referenced technical problems. For example, the system can use a set of models to identify symbols in the two-dimensional document, to separately label identified symbols from the two-dimensional document, and can perform other suitable operations. The system can include or otherwise use one or more machine-learning models that may be trained to identify candidate symbols in the two-dimensional document. Additionally or alternatively, the system can include or otherwise use one or more machine-learning models that may be trained to label previously identified candidate symbols. In some examples, and as an alternative to using the one or more trained machine-learning models, the system can use one or more computer services or algorithms to identify or to label candidate symbols from the two-dimensional document. An output of the system can include a list of candidate symbols and corresponding lists of likely labels for each candidate symbol included in the list of candidate symbols.

The system can use encodings to label identified candidate symbols. For example, the system can transform each identified symbol into a corresponding representation vector that can be compared to other representation vectors for determining a label for the corresponding identified symbol. A machine-learning model, such as a hybrid machine-learning model, can be used to transform the identified symbol into a representation vector. By transforming the identified symbol into the representation vector, the identified symbol can be converted into a form that is capable of being numerically compared to other or existing symbols to determine a label for the identified symbol. In some examples, each symbol of the symbols included in the two-dimensional document can be identified by extracting a bounding box from the two-dimensional document. The two-dimensional document can be a two-dimensional image, or the two-dimensional document can be converted, such as by the system or a separate system communicatively coupled with the system, to a two-dimensional image having image data that can be analyzed or otherwise processed by the system. The system can use a pre-trained machine-learning model, or other suitable computer service, to search the image data of the two-dimensional image to identify locations at which candidate symbols may be positioned. The pre-trained machine-learning model can extract a bounding box around each candidate symbol, and the bounding box, which may include a location of the candidate symbol and may lack a label or other express data suggesting what the candidate symbol may be, can be used, such as further processed, by the system to determine a label for the candidate symbol based on an encoding generated by the hybrid machine-learning model.

The hybrid machine-learning model may include various layers such as convolution layers, transformation layers, pooling layers, and other suitable layers for the hybrid machine-learning model. For example, the hybrid machine-learning model can include one or more layers (supervised layers) trained via supervised training, at least one layer (unsupervised layer) trained via unsupervised training techniques, and other suitable layers trained using other suitable training techniques. The hybrid machine-learning model can receive one or more bounding boxes, or other input from the two-dimensional image, as an input and can generate, or facilitate generation of, a representation vector that can be or include a numerical, or otherwise objectively comparable encoding, representation of one or more candidate symbols associated with the one or more bounding boxes.

In some embodiments, the supervised layers of the hybrid machine-learning model are similar or identical to one or more layers of an image-classification convolutional neural network. The supervised layers of the hybrid machine-learning model may include one or more convolutional layers, pooling layers, and/or other suitable machine-learning layers that can, in combination, ingest the bounding box, or data included therein, that indicates a candidate symbol and generate features corresponding to the bounding box. In one example, the supervised layers can include an ingestion layer that receives the bounding box and a set of convolutional layers that generates a set of features corresponding to the bounding box or candidate symbol thereof, though other examples of architecture of the supervised layers are possible.

The features can be projected into multiple dimensions by the hybrid machine-learning model. For example, the unsupervised layer projects the features into N dimensions by performing various mathematical operations. In one such example, the unsupervised layer can receive the features generated by the supervised layers and can use the features to generate a representation vector. The representation vector can include an N x 1 matrix, where N corresponds to the number of dimensions to which the features are projected by the unsupervised layer. In some embodiments, the representation vector is an N-dimensional vector that includes N numerical values corresponding to the features of the input image and generated by the supervised layers.

The representation vector may represent the candidate symbol indicated by, or otherwise included in, the bounding box. For example, the representation vector can be used to label the candidate symbol, to search for two-dimensional models that have similar or identical features as the candidate symbol, and the like. The representation vector can be used, for example by the hybrid machine-learning model, the computing device that includes or executes the hybrid machine-learning model, other suitable computing devices or systems, etc., to generate and submit a query for comparing the representation vector of the candidate symbol to other symbols included in a database. For example, the hybrid machine-learning model can generate and output the representation vector for the candidate symbol, and a computing device, such as the system, can generate a search query using the representation vector. The search query can be used to query an existing database that includes previously generated representation vectors for other symbols that have previously been identified and/or labeled. In some embodiments, the representation vector can be used to determine a similarity between one or more existing symbols and the candidate symbol identified by the system. The representation vector can otherwise be used to determine a similarity between candidate symbols and identified symbols from the two-dimensional document. In some embodiments, there may be multiple different and/or distinct existing databases for previously generated representation vectors. Each database may correspond with a different tenant or entity that may use or benefit from using the system disclosed herein.

The system can use an output of the hybrid machine-learning model to generate a labeled two-dimensional image. For example, the system can label each symbol included in the two-dimensional document to generate the labeled two-dimensional image. Generating the labeled two-dimensional image can involve performing a comparison between a corresponding representation vector that represents a candidate symbol and one or more representation vectors corresponding to one or more symbols included in a library of known symbols. In accordance with determining that the corresponding representation vector exceeds a threshold similarity with a particular representation vector of the one or more representation vectors, the system can apply a first label to the candidate symbol in which the first label is a label of a first symbol that is represented by the particular representation vector. In other examples, and in accordance with determining that the corresponding representation vector does not exceed the threshold similarity with any representation vectors of the one or more representation vectors, the system can apply a second label to the symbol in which the second label is provided by an entity associated with the two-dimensional image. That is, the entity may provide a custom label for the candidate symbol indicated by the corresponding representation vector, and the system may store, for example as an associated pair, the custom label and the candidate symbol in the library of known symbols. In some examples, the system provides the labeled two-dimensional image for facilitating a real-world operation involving the two-dimensional document. Providing the labeled two-dimensional image can involve outputting the labeled two-dimensional image on a graphical user interface, transmitting the labeled two-dimensional image to a separate computing device for automatically initiating the real-world operation, etc. In some embodiments, the real-world operation can include an acquisition operation for acquiring real-world items corresponding to the symbols included in the labeled two-dimensional image.

The hybrid machine-learning model, or the system that can use the hybrid machine-learning model, improves the functioning of a computing device and improves at least one technical field. By converting a two-dimensional image, such as a bounding box extracted by the system and corresponding to a candidate symbol, to a representation vector, the hybrid machine-learning model reduces an amount of computing resources (e.g., computer memory, computer processing power and/or processing time, and the like) required to search for images and/or models or required to label candidate symbols and identify similar symbols in a two-dimensional document. For example, instead of comparing a similarity of each pixel of a two-dimensional image to each pixel of other images or models, the hybrid machine-learning model generates a representation vector that can be used to compare the two-dimensional image to existing vectors for existing symbols, which is much less computing-intensive than the pixel comparison. Additionally, at least the technical field of image labeling is improved using the hybrid machine-learning model, though other technical fields can be improved using the hybrid machine-learning model. For example, labeling symbols in two-dimensional images using words or other text-based terms is difficult since content creators may use different terms (or even different languages) to describe created content (e.g., images and/or three-dimensional models) than users that want to consume the created content. The hybrid machine-learning model obviates the need to describe the created content with text-based terms since the hybrid machine-learning model generates a representation vector for content, such as the symbols, and the representation vector can be used instead of text-based terms to search for or otherwise identify the content. Thus, by generating the representation vector, the hybrid machine-learning model improves at least the technical field of image labeling.

The following illustrative examples are presented to introduce the reader to the general subject matter discussed herein and are not intended to limit the scope of the disclosed concepts. The following sections describe various additional features and examples with reference to the drawings in which like numerals indicate like elements and directional descriptions are used to describe the illustrative aspects but, like the illustrative aspects, should not be used to limit the present disclosure. Additionally, the presented figures are generally described with respect to computer modeling operations, but the general subject matter discussed herein is not limited to computer modeling operations.

In some embodiments, there may be situations in which users are not interested in particular symbols. For example, there might be symbols for stairs detected for an entity that is searching for about electrical components. The entity may be happy to delete one or two sets of stairs manually, but the entity may not be able to delete them all. A delete request can be processed as its own label. By treating a delete class as its own class, and recording its representation vector, other symbols can be identified in the document which match this "deleted" class and delete those simultaneously, just as if a label was created for whatever it symbolized.

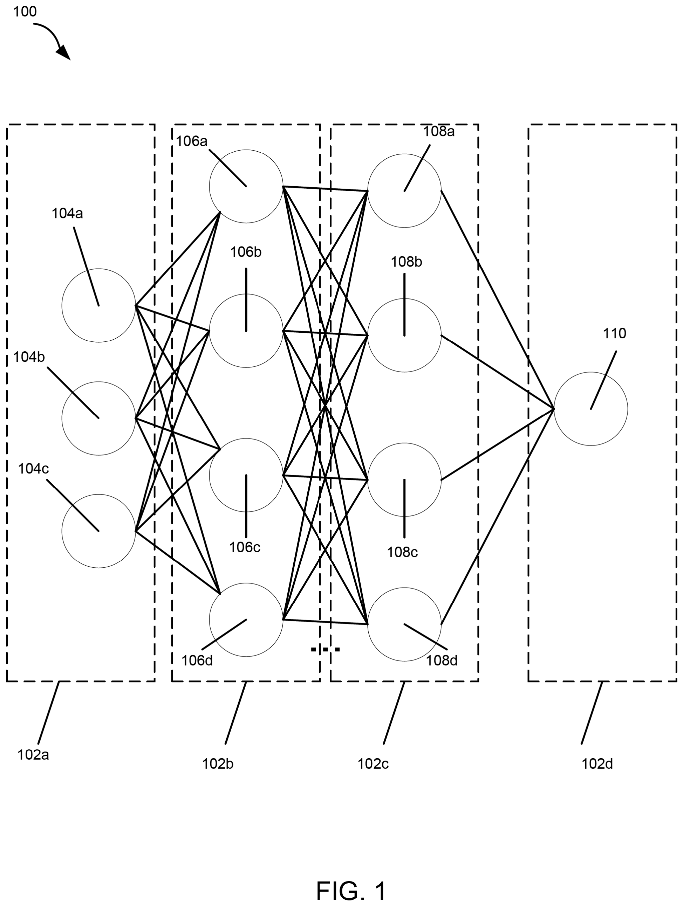

Referring first to **FIG. 1****,** an architecture of an embodiment of a hybrid machine-learning model 100 for generating a representation vector for symbols is depicted. As illustrated, the hybrid machine-learning model 100 includes four layers, though any other suitable number, such as less than four and/or more than four, of machine-learning layers can be included in the hybrid machine-learning model 100. Additionally, the hybrid machine-learning model 100 can include a combination of supervised layers, which are trained using supervised training techniques, and unsupervised layers that are trained using unsupervised training techniques.

The hybrid machine-learning model 100 can include layers 102a-d and/or any other suitable machine-learning layers for generating the representation vector. The layer 102a can be or include an ingestion layer, the layers 102b can be or include one or more first hidden layers, the layers 102c can be or include one or more second hidden layers, and the layer 102d can be or include an output layer. The ingestion layer 102a can ingest an input image or input image data, such as a bounding box that can include or indicate a symbol, into the hybrid machine-learning model 100. For example, the ingestion layer 102a can receive input that includes image data for a bounding box extracted from a two-dimensional image, a two-dimensional snapshot, or the like and can ingest various attributes from the input. Three attributes 104a-c are illustrated as being ingested into the hybrid machine-learning model 100, but other suitable numbers, such as less than three and/or more than three, attributes can be ingested into the hybrid machine-learning model 100 via the ingestion layer 102a.

The hybrid machine-learning model 100 can map the attributes 104a-c to features 106a-d via the first hidden layers 102b. As illustrated, the hybrid machine-learning model 100 maps the three attributes 104a-c to four features 106a-d, though any other suitable numbers, such as less than four and/or more than four, of features can be included in or generated by the first hidden layers 102b. The first hidden layers 102b can include any suitable combination of convolutional layers, pooling layers, and other suitable types of machine-learning layers for mapping the attributes 104a-c to the features 106a-d. In a particular example, the first hidden layers 102b can include four convolutional layers and one pooling layer for at least indirectly mapping (e.g., each layer can map inputs to outputs, etc.) the attributes 104a-c to the features 106a-d.

The hybrid machine-learning model 100 can map the features 106a-d to the features 108a-d via the second hidden layers 102c. As illustrated, the hybrid machine-learning model 100 maps the four features 106a-d to four features 108a-d, though any other suitable numbers, such as less than four and/or more than four, of features can be included in or generated by the second hidden layers 102c. The second hidden layers 102c can include any suitable combination of convolutional layers, pooling layers, and the like for mapping the features 106a-d to the features 108a-d. In a particular example, the second hidden layers 102c can include four convolutional layers and one pooling layer for at least indirectly mapping (e.g., each layer can map inputs to outputs, etc.) the features 106a-d to the features 108a-d. In some embodiments, the first hidden layers 102b and the second hidden layers 102c are similar or identical, though in other embodiments, the first hidden layers 102b and the second hidden layers 102c may not include similar or identical types or numbers of hidden layers.

In some embodiments, the ingestion layer 102a, the first hidden layers 102b, and/or the second hidden layers 102c are supervised layers such that each of these layers may be trained via supervised training techniques. Supervised training can involve inputting labeled training data into the layers and training the layers to map inputs to outputs using labels of the labeled training data. For example, training the supervised layers of the hybrid machine-learning model 100 can involve inputting labeled image data, such as labeled symbols, into the ingestion layer 102a, labeled attributes into the first hidden layers 102b, labeled features into the second hidden layers 102c, or the like to train each of the layers to map respective inputs to respective outputs. In some embodiments, a combination of the ingestion layer 102a, the first hidden layers 102b, and the second hidden layers 102c may be similar to an image classification convolutional neural network (IC-CNN) such that first features generated by the hybrid machine-learning model 100 may be similar or identical to second features generated by the IC-CNN and may be generated using similar or identical techniques as techniques used by the IC-CNN. But, the hybrid machine-learning model 100 post-processes or otherwise uses the generated features differently than the IC-CNN.

The hybrid machine-learning model 100 can generate a representation vector by mapping the features 108a-d into multiple dimensions using the output layer 102d. For example, the hybrid machine-learning model 100 can use the output layer 102d to convert the features 108a-d into *N* numerical representations of the features 108a-d. The *N* numerical representations can be concatenated or otherwise combined to generate an output 110 that can include the representation vector. The output layer 102d may be trained using unsupervised training techniques. For example, the output layer 102d may be trained using one or more training data sets that do not include labels. In a particular example, the output layer 102d is trained using an unlabeled training data set that includes features from input image data, which can include symbols or data relating to symbols, and output representation vector values. Thus, the hybrid machine-learning model 100 uses supervised layers to generate features based on input image data and uses unsupervised layers to transform the generated features into N dimensions to generate the representation vector. The representation vector can be output to facilitate labeling a two-dimensional document with labeled symbols, to facilitate a real-world interaction using the labeled two-dimensional document, and for other suitable purposes.

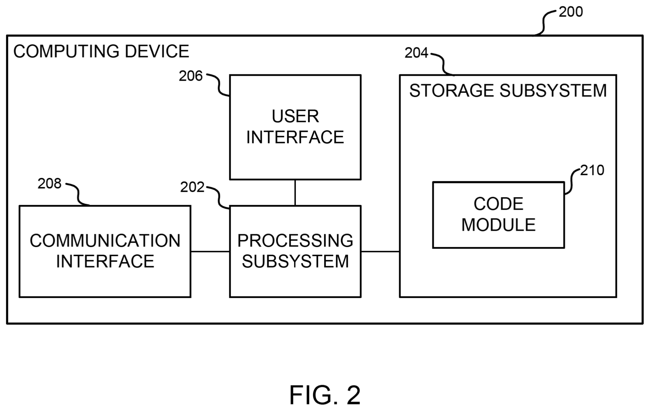

**FIG.** 2 is a simplified block diagram of a computing device 200 that can be used to detect and label symbols with respect to a two-dimensional document. The computing device 200 can implement some or all functions, behaviors, and/or capabilities described herein that would use electronic storage or processing, as well as other functions, behaviors, or capabilities not expressly described. The computing device 200 includes a processing subsystem 202, a storage subsystem 204, a user interface 206, and/or a communication interface 208. The computing device 200 can also include other components, which may not be expressly illustrated, such as a battery, power controllers, and other components operable to provide various enhanced capabilities. In some embodiments, the computing device 200 can be implemented in a desktop computer, a laptop computer, a mobile device, such as a tablet computer, a smart phone, and/or a mobile phone, etc., a wearable device, a media device, application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic units designed to perform a function or combination of functions described above, and the like.

The storage subsystem 204 can be implemented using a local storage and/or removable storage medium, such as using disk, flash memory (e.g., secure digital card, universal serial bus flash drive), or any other non-transitory storage medium, or a combination of media, and can include volatile and/or non-volatile storage media. Local storage can include random access memory (RAM), including dynamic RAM (DRAM), static RAM (SRAM), or battery backed-up RAM. In some embodiments, the storage subsystem 204 can store one or more applications and/or operating system programs to be executed by the processing subsystem 202, including programs to implement some or all operations described above that would be performed using a computer. For example, the storage subsystem 204 can store one or more code modules, such as code modules 210, for implementing one or more method steps, or other suitable operations, described herein.

A firmware and/or software implementation may be implemented with modules such as procedures, functions, and so on. A machine-readable medium tangibly embodying instructions may be used in implementing methodologies described herein. The code modules 210, such as instructions stored in memory, may be implemented within a processor or external to the processor. As used herein, the term "memory" refers to a type of long term, short term, volatile, nonvolatile, or other suitable storage medium and is not to be limited to any particular type of memory or number of memories or type of media upon which memory is stored. Moreover, the term "storage medium" or "storage device" may represent one or more memories for storing data, including read only memory (ROM), RAM, magnetic RAM, core memory, magnetic disk storage mediums, optical storage mediums, flash memory devices and/or other machine-readable mediums for storing information. The term "machine-readable medium" includes, but is not limited to, portable or fixed storage devices, optical storage devices, wireless channels, and/or various other storage mediums capable of storing instruction(s) and/or data.

Furthermore, embodiments may be implemented by hardware, software, scripting languages, firmware, middleware, microcode, hardware description languages, and/or any combination thereof. When implemented in software, firmware, middleware, scripting language, and/or microcode, program code or code segments to perform tasks may be stored in a machine readable medium such as a storage medium. A code segment, such as the code modules 210, or machine-executable instruction may represent a procedure, a function, a subprogram, a program, a routine, a subroutine, a module, a software package, a script, a class, or a combination of instructions, data structures, and/or program statements. A code segment may be coupled to another code segment or a hardware circuit by passing and/or receiving information, data, arguments, parameters, and/or memory contents. Information, arguments, parameters, data, etc., may be passed, forwarded, or transmitted by suitable means including memory sharing, message passing, token passing, network transmission, etc.

Implementation of the techniques, blocks, steps, and means described herein may be done in various ways. For example, the techniques, blocks, steps, and means may be implemented in hardware, software, or a combination thereof. For a hardware implementation, the processing units may be implemented within one or more ASICs, DSPs, DSPDs, PLDs, FPGAs, processors, controllers, micro-controllers, microprocessors, other electronic units designed to perform the functions described above, and/or a combination thereof.

Each code module 210 may include sets of instructions or codes embodied on a computer-readable medium that directs a processor of the computing device 200 to perform corresponding actions. The instructions may be configured to run in sequential order, in parallel, such as under different processing threads, or in a combination thereof. After loading a code module 210 on a general-purpose computer system, the general-purpose computer is transformed into a special-purpose computer system.

Computer programs incorporating various features and/or operations described herein, such as in one or more of the code modules 210, may be encoded and stored on various computer-readable storage media. Computer-readable media encoded with the program code may be packaged with a compatible electronic device, or the program code may be provided separately from electronic devices such as via Internet download or as a separately packaged computer-readable storage medium, etc. The storage subsystem 204 can additionally store information useful for establishing network connections using the communication interface 208.

The user interface 206 can include input devices, such as a touch pad, a touch screen, a scroll wheel, a click wheel, a dial, a button, a switch, a keypad, a microphone, etc., as well as output devices, such as a video screen, indicator lights, speakers, headphone jacks, a virtual- or augmented-reality display, etc., together with supporting electronics such as digital-to-analog or analog-to-digital converters, signal processors, etc. A user can operate input devices of the user interface 206 to invoke the functionality of the computing device 200 and can view and/or hear output from the computing device 200 via output devices of the user interface 206. In some embodiments, the user interface 206 might not be present such as for a process using an ASIC.

The processing subsystem 202 can be implemented as one or more processors such as integrated circuits, one or more single-core or multi-core microprocessors, microcontrollers, central processing unit, graphics processing unit, etc. In operation, the processing subsystem 202 can control operation of the computing device 200. In some embodiments, the processing subsystem 202 can execute a variety of programs in response to program code and can maintain multiple concurrently executing programs or processes. At a given time, some or all of a program code to be executed can reside in the processing subsystem 202 and/or in storage media, such as the storage subsystem 204. Through programming, the processing subsystem 202 can provide various functionality for the computing device 200. The processing subsystem 202 can also execute other programs to control other functions of the computing device 200, including programs that may be stored in the storage subsystem 204.

The communication interface 208 can provide voice and/or data communication capability for the computing device 200. In some embodiments, the communication interface 208 can include radio frequency (RF) transceiver components for accessing wireless data networks (e.g., Wi-Fi network; 3G, 4G/LTE, 5G; etc.), mobile communication technologies, components for short-range wireless communication (e.g., using Bluetooth communication standards, NFC, etc.), other components, or combinations of technologies. In some embodiments, the communication interface 208 can provide wired connectivity, such as universal serial bus, Ethernet, universal asynchronous receiver/transmitter, etc., in addition to, or in lieu of, a wireless interface. The communication interface 208 can be implemented using a combination of hardware (e.g., driver circuits, antennas, modulators/demodulators, encoders/decoders, and other analog and/or digital signal processing circuits) and software components. In some embodiments, the communication interface 208 can support multiple communication channels concurrently. In some embodiments, the communication interface 208 is not used.

It will be appreciated that the computing device 200 is illustrative and that variations and modifications are possible. The computing device 200 can have various functionality not specifically described, such as voice communication via cellular telephone networks, etc., and can include components appropriate to such functionality. Further, while the computing device 200 is described with reference to particular blocks, it is to be understood that these blocks are defined for convenience of description and are not intended to imply a particular physical arrangement of component parts. For example, the processing subsystem 202, the storage subsystem 204, the user interface 206, and/or the communication interface 208 can be in one device or distributed among multiple devices. Further, the blocks need not correspond to physically distinct components. Blocks can be configured to perform various operations, for example by programming a processor or providing appropriate control circuitry, and various blocks might or might not be reconfigurable depending on how an initial configuration is obtained. Embodiments of the present invention can be realized in a variety of apparatuses including electronic devices implemented using a combination of circuitry and software. Electronic devices described herein can be implemented using the computing device 200, and the computing device 200 can be used to perform the operations described herein, any subset thereof, or other suitable operations for detecting and/or labeling symbols in a two-dimensional document using encoding.

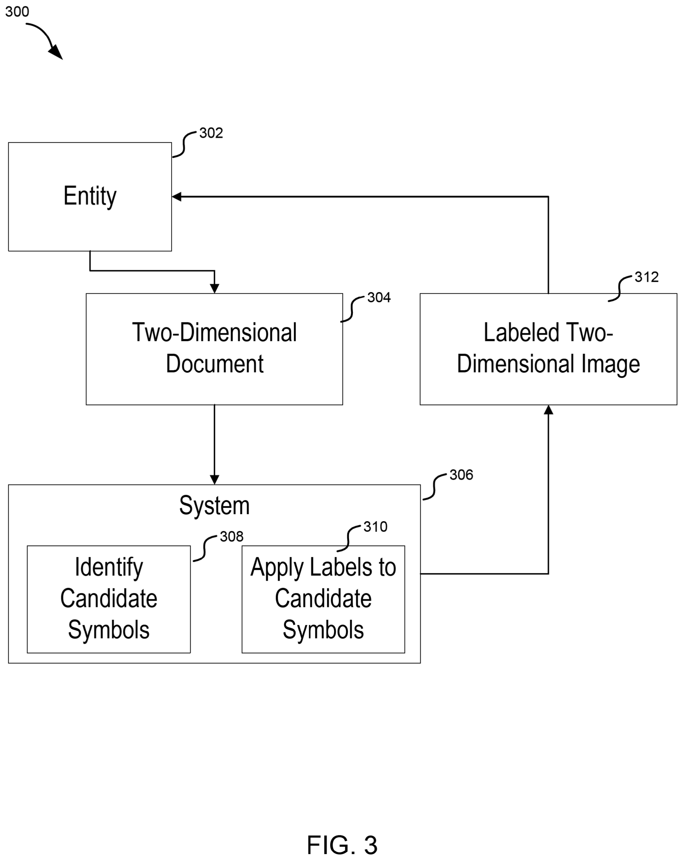

**FIG. 3** is a process flow 300 for labeling a two-dimensional document using encoding. As illustrated in **FIG. 3****,** the process flow 300 can begin with an entity 302 that can provide a two-dimensional document 304 to a system 306 that can be configured to perform one or more operations with respect to the two-dimensional document 304. For example, the entity 302 may be a human, though the entity 302 can be or include any other suitable entity such as a computing device, an artificial intelligence model, etc., and may cause a separate computing device, such as a mobile computing device, a laptop, etc, to transmit the two-dimensional document 304 to the system 306, which may be or include a backend server or other computing system configured to perform the one or more operations with respect to the two-dimensional document 304.

The system 306 receives the two-dimensional document 304 and performs operations, including identifying candidate symbols 308 and labeling candidate symbols 310, with respect to the two-dimensional document 304. For example, the system 306 can convert the two-dimensional document 304 to a two-dimensional image or can otherwise extract image data from the two-dimensional document 304. The two-dimensional document 304 can include or otherwise indicate a set of symbols, and each symbol of the set of symbols may correspond to a real-world item or object. In a particular example, such as examples in which the two-dimensional document 304 is a blueprint for a building floor plan, the set of symbols can include different symbols corresponding to different components of the building floor plan. The system 306 can apply a trained detection service to the image data associated with the two-dimensional document 304. For example, the system 306 can input the image data into the trained detection service, which may be or include a trained machine-learning model that identifies candidate symbols from image data, to identify candidate symbols at 308. Additionally or alternatively, the system 306 can provide the identified candidate symbols to a hybrid machine-learning model to apply labels to the candidate symbols at 310. In a particular example, the identified candidate symbols at 308 can be, can be included in, or can include one or more bounding boxes that can be input into the hybrid machine-learning model. The one or more bounding boxes may each include a location of a corresponding candidate symbol and can include data relating to the symbol. The system 306 can input the one or more bounding boxes into the hybrid machine-learning model, which can output labels for each candidate symbol of the identified candidate symbols. In some examples, the hybrid machine-learning model can output a representation vector for each identified candidate symbol, and the representation vector, or encoding, can be used to determine the labels for the candidate symbols. In some examples, identifying the candidate symbols, such as at 308, and labeling the identified candidate symbols, such as at 310, can be done separately such as at separate times, by separate computing devices, or otherwise independently of one another.

The system 306 can output the labels, which may be determined at 310, for the identified candidates symbols. For example, the system 306 can apply the labels to the identified candidate symbols in the two-dimensional document 304 to generate a labeled two-dimensional image 312. The labeled two-dimensional image 312 may be similar or identical to the two-dimensional document 304 but may have the labels applied to the symbols included in the two-dimensional document 304. Additionally or alternatively, and instead of applying a single label to each symbol in the two-dimensional document 304, the system 306 can provide a list of labels that may likely apply to each candidate symbol included in the identified candidate symbols. The system 306 can generate a list of likely labels for each symbol and, upon selection by the entity 302 of a corresponding element on a graphical user interface displaying the labeled two-dimensional image 312, the system 306 can display the list of likely labels for the corresponding symbol. The system 306 transmits the labeled two-dimensional image 312 to the entity 302 via a graphical user interface, and the entity 302 can approve of the labels applied to the symbols, can select, for example from the list of likely labels, the labels to be applied to each symbol included in the two-dimensional document 304, etc. Upon approval or confirmation from the entity 302, the labeled two-dimensional image 312, or any edited version thereof, can be published or otherwise saved to a library.

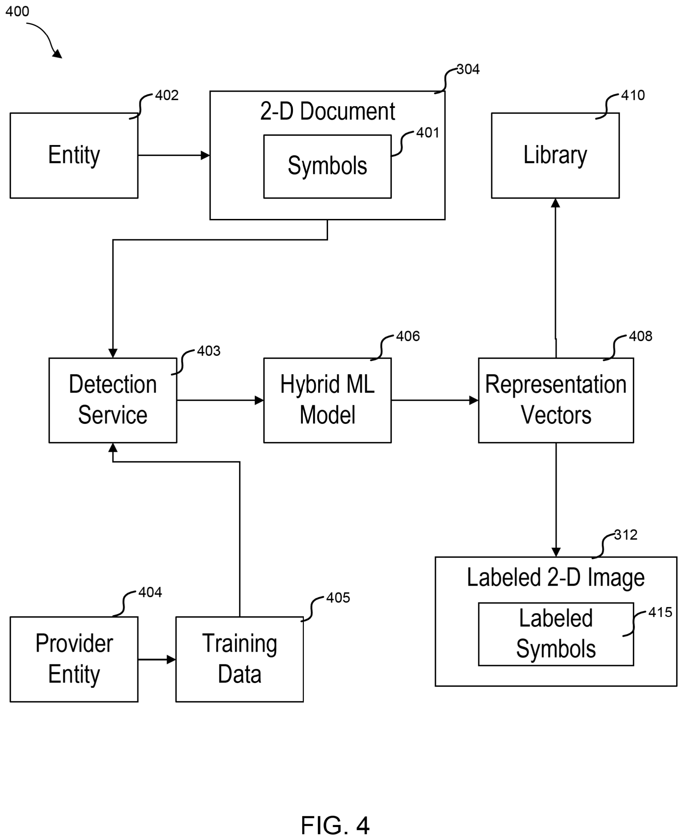

**FIG. 4** is a process flow 400 for generating, using encodings, a labeled two-dimensional image 312 based on a two-dimensional document 304 with symbols 401. In some embodiments, encodings that can be used to facilitate generation of the labeled two-dimensional image 312 can include representation vectors that can be generated based on features of the symbols 401. Each symbol of the symbols 401 can represent a real world object. The entity 402 may generate or otherwise transmit the two-dimensional document 304 that includes the symbols 401 to a system, such as the system 306, that can include or otherwise execute a detection service 403.

In some examples, the detection service 403 may be or include a trained machine-learning model that is trained to identify candidate symbols in two-dimensional documents. That is, the detection service 403 can be or include a trained machine-learning model, or other suitable trained classifier model, configured to extract a set of candidate symbols from the two-dimensional document 304 based on the symbols 401. The detection service 403 may be trained using training data 405 that may be provided by a provider entity 404. The training data 405 may be standard, existing, or general training data, or the training data 405 may be custom training data associated with the entity 402. For example, if the entity 402 has previously interacted with the provider entity 404, or any services provided thereby, then the provider entity 404 may use entity-specific training data that can be used to tune the detection service 403 to content more likely to be associated with the entity 402. In other examples, such as examples in which the entity 402 and the provider entity 404 have no interaction history with one another, then the provider entity 404 may use standard or otherwise nonentity-specific training data to train the detection service 403.

The detection service 403 may receive input data and generate output data. In some embodiments, the input data can include image data based on the two-dimensional document 304, and the output data may include indications of candidate symbols based on the symbols 401 included in the two-dimensional document 304. The detection service 403 can extract the indications of the candidate symbols by identifying and extracting bounding boxes corresponding to the candidate symbols. For example, and for each candidate symbol identified in the image data based on the two-dimensional document 304, the detection service 403 can determine a location for the candidate symbol and can extract a bounding box for the candidate symbol based on the location. Additionally or alternatively, the detection service 403 can include other data, such as numbers of pixels, pixel content, and other suitable data, with the bounding box. The bounding box may include sufficient data to allow a label to be applied to the candidate symbol.

The output, such as the bounding boxes, of the detection service 403 can be provided to a hybrid machine-learning model 406. In some embodiments, the hybrid machine-learning model 406 can receive the output from the detection service 403 and can generate one or more representation vectors 408. The hybrid machine-learning model 406 can generate one representation vector for each distinct symbol detected in the two-dimensional document 304. For example, if 15,000 symbols are detected in the two-dimensional document 304, then the hybrid machine-learning model 406 can generate 15,000 representation vectors in which each symbol of the 15,000 symbols corresponds to only one representation vector of the 15,000 representation vectors. The one or more representation vectors 408 can be used to determine labels for the candidate symbols. For example, the one or more representation vectors 408 can be compared to one or more existing representation vectors stored at a library 410. The library 410 may be or include a cloud-based storage location, a server storage location, or other suitable computer-based storage location that can store information digitally. In some examples, the library 410 may be segmented or partitioned into partitions that can store tenant-specific data. The tenant-specific data can include previously identified and/or labeled symbols associated with a specific tenant or entity. Additionally or alternatively, the library 410 may include tenant-agnostic data that can include symbol-label mappings that may be relevant to more than one tenant.

In some embodiments, the one or more representation vectors 408 can be used to determine labels to be applied to the candidate symbols of the two-dimensional document 304. For example, a system, such as the system 306, can use the one or more representation vectors 408 to perform a comparison between the candidate symbols and a set of previously defined symbols in the library 410. The previously defined symbols may have corresponding representation vectors that were previously generated such as by the hybrid machine-learning model 406. The system can generate a query using the one or more representation vectors 408, and the query can cause each representation vector of the one or more representation vectors 408 to be compared with representation vectors included in the library 410 or stored at other suitable locations.

A result of the comparison can be used to determine the labels to apply to the candidate symbols. For example, the comparison can involve determining a similarity score between each representation vector of the one or more representation vectors 408 and each representation vector in the library 410 or stored elsewhere. The similarity score can be compared to a threshold similarity to determine whether the corresponding candidate symbol associated with the corresponding representative vector should have a particular label. If the similarity score is above the threshold similarity, then the label may be applied to the candidate symbol, and if the similarity score is not above the threshold similarity, then the label may not be applied to the candidate symbol. In some embodiments, if the similarity score is above the threshold similarity, then the hybrid machine-learning model 406 can determine a likelihood that the label should be applied to the candidate symbol. The label can be included in a list of likely labels to apply to the candidate symbol.

In response to performing the comparisons using the one or more representation vectors 408, labeled symbols 415 can be determined. The labeled symbols 415 may be the symbols 401 with labels applied thereto. In some embodiments, the system, or the hybrid machine-learning model 406 or other suitable service, applies the labels to the symbols 401 to generate the labeled symbols 415. In other embodiments, the system, or the hybrid machine-learning model 406 or other suitable service, presents a list of likely labels to the entity 402, and the entity 402 indicates a selection of labels to apply to the symbols 401 to generate the labeled symbols 415. The labeled symbols 415 are applied to the two-dimensional document 304 to generate the labeled two-dimensional image 312. The system, or the hybrid machine-learning model 406 or other suitable service, can provide, such as output, the labeled two-dimensional image 312 for further processing, for initiating or facilitating a real-world operation, or for other suitable purposes. Additionally or alternatively, the system, or the hybrid machine-learning model 406 or other suitable service, can save symbol-label pairs included in the labeled symbols 415 to the library 410 to improve subsequent operations for labeling symbols.

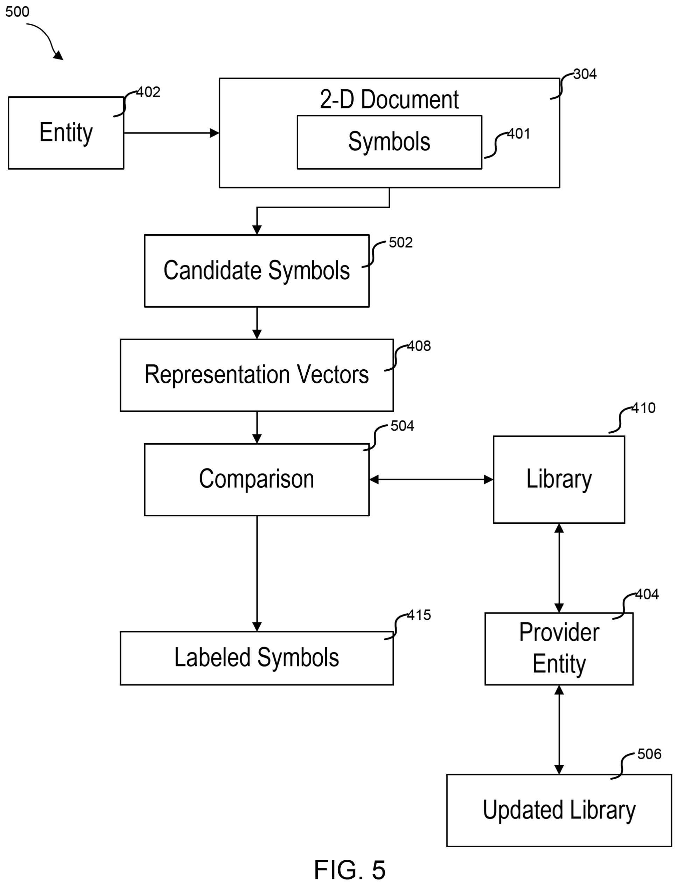

**FIG. 5** is a process flow 500 for determining labels to apply to candidate symbols based on encodings and updating a library with the encodings. As illustrated in **FIG. 5****,** the process flow 500 may begin with the entity 402 and the provider entity 404. The provider entity 404 provides, or otherwise has access to, the library 410, and the entity 402 provides the two-dimensional document 304. In some embodiments, providing the two-dimensional document 304 can involve generating the two-dimensional document 304, transmitting (e.g., to the system 306) the two-dimensional document 304, etc. The two-dimensional document 304 can include the symbols 401, and providing the two-dimensional document 304 can cause a process for labeling the symbols 401 to initiate.

The two-dimensional document 304, or any subset of data thereof, can be provided to a trained detection service, such as the detection service 403, to identify candidate symbols 502. In some embodiments, the candidate symbols 502 may be similar or identical to the symbols 401. The trained detection service can extract bounding boxes for each identified symbol of the symbols 401, and the extracted bounding boxes can be provided as the candidate symbols 502. That is, the extracted bounding boxes can include locations and other data relating to the candidate symbols 502. The candidate symbols 502 are provided to a machine-learning model, such as the hybrid machine-learning model 406, that is configured to generate the one or more representation vectors 408 based on the candidate symbols 502. The machine-learning model can use a hybrid approach of supervised learning layer and unsupervised learning layers to transform each candidate symbol of the candidate symbols 502, or the bounding boxes or data thereof, into multiple features represented as a representation vector of the one or more representation vectors 408. The one or more representation vectors 408 can be used to perform a comparison 504.

The comparison 504 involves comparing each representation vector of the one or more representation vectors 408 with a separate representation vector of representation vectors included in the library 410 provided by or otherwise accessible by the provider entity 404. The comparison 504 can involve determining a similarity score between each representation vector of the one or more representation vectors 408 and each representation vector of the representation vectors, or any subset thereof, included in the library 410. For example, a subset of the representation vectors included in the library 410 can be selected and used for the comparison 504 based on the subset being associated with a specific tenant with which the entity 402 is associated. The comparison 504 can allow the labeled symbols 415 to be generated or otherwise determined. For example, the comparison 504 can yield similarity scores to be generated between compared representation vectors, and the similarity scores can be compared to a threshold similarity to determine labels to apply to the candidate symbols 502. Applying the determined labels to the candidate symbols 502 can cause the labeled symbols 415 to be generated, and the labeled symbols 415 can be used to generate or otherwise provide the labeled two-dimensional image 312.

In response to the system, or other suitable computing device, determining the labels for the candidate symbols 502, the library 410 may be updated. Label-symbol pairs, which may be indicated by the labeled symbols 415, can be stored at the library 410 to generate the updated library 506. In some embodiments, the updated library 506 may be partitioned into multiple partitions corresponding with different tenants. For example, the label-symbol pairs indicated by the labeled symbols 415 can be stored at a particular partition, which is associated with the entity 402, of the updated library 506. Additionally or alternatively, the label-symbol pairs can be stored in multiple partitions or in a partition for general training purposes to enhance performance of the system, or any component, service, or model thereof, in detecting and labeling symbols in two-dimensional documents.

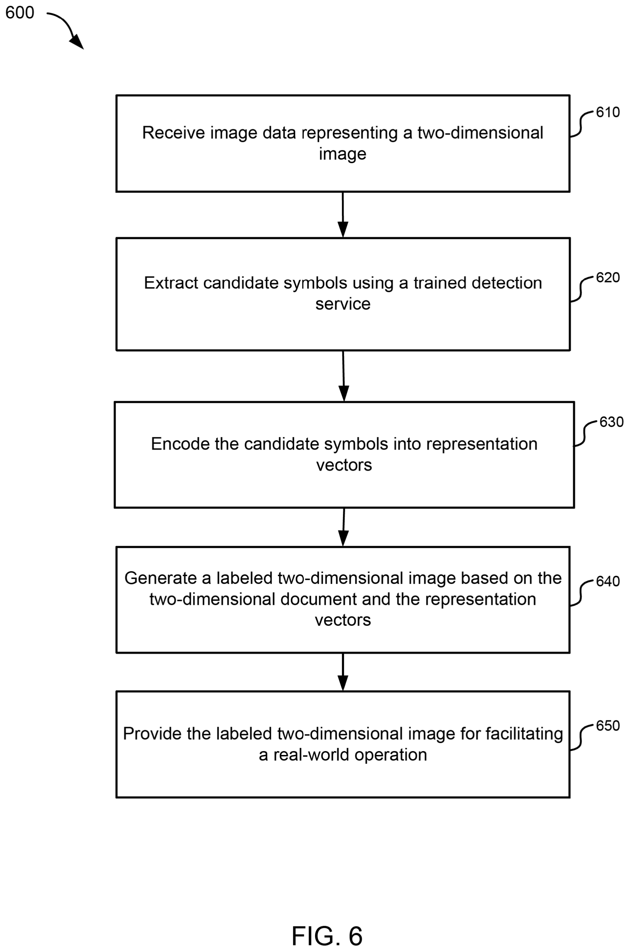

In **FIG. 6****,** a flowchart of an embodiment of a process 600 for detecting and labeling symbols in a two-dimensional document using encoding is illustrated. In some embodiments, the process 600 can be performed by the computing device 200 and/or any other suitable computing device or computing system. The operations of the process 600 are described in a particular order, but the operations of the process 600 can be performed in any other suitable order including substantially contemporaneously. One purpose of process 600 can include detecting and labeling symbols in a two-dimensional document using a segmented approach involving encoding, though the process 600 can be used for any other suitable purposes.

### Receiving image data

The process 600 begins at block 610 with receiving image data representing a two-dimensional document. The computing device 200 can receive the image data from user input, for example via a user interface or the like provided by the computing device 200. In some embodiments, the computing device 200 can receive the two-dimensional document via user input and can extract the image data from the two-dimensional document. Additionally or alternatively, the two-dimensional image may be or include a two-dimensional snapshot of a three-dimensional image, a link to a network location storing a two-dimensional image, an edge-detected two-dimensional drawing input by a user, or the like. The two-dimensional document may include symbols, which may include representations of real-world objects that have a specific representation in the two-dimensional document. In some embodiments, the real-world objects may have different specific representations based on an entity that generates or otherwise processes the two-dimensional document.

### Extracting candidate symbols using a trained detection service

At block 620, candidate symbols are extracted using a trained detection service. The trained detection service can be trained using training data that includes historical documents with symbols. In some embodiments, the trained detection service is configured to extract the candidate symbols by extracting bounding boxes that include a location and other data relating to the candidate symbols. Additionally or alternatively, each symbol of the symbols included in the candidate symbols can be extracted for a distinct symbol included in the two-dimensional document or image data thereof. In some embodiments, the two-dimensional document, or image data thereof, can be divided into a set of sub-images that have a smaller resolution than the two-dimensional document or image data thereof. For example, if the two-dimensional document, or image data thereof, has a resolution of 8000x8000 pixels, then each sub-image of the set of sub-images can have a resolution of approximately 256x256 pixels or other suitable resolution that is smaller than 8000x8000 pixels. The trained detection service can be applied to each sub-image of the set of sub-images to extract the candidate symbols.

### Encoding the candidate symbols into representation vectors

At block 630, the candidate symbols are encoded into representation vectors. Each candidate symbol of the candidate symbols can be encoded into a distinct representation vector, which may or may not be similar to other representation vectors encoded for other candidate symbols. That is, a first number of candidate symbols may be approximately the same as a second number of representation vectors encoded for the candidate symbols. In some embodiments, the candidate symbols can be encoded into the representation vectors by a hybrid machine-learning model. For example, the hybrid machine-learning model can generate features and map attributes to the generated features for the candidate symbols to encode the candidate symbols into the representation vectors.

The computing device 200 can use a subset of the hybrid machine-learning model to generate the features. For example, the computing device 200 can use the supervised layers, such as the layers 102a-c, to generate features corresponding to the candidate symbols and based on the bounding boxes extracted from the two-dimensional document or image data thereof. The hybrid machine-learning model can include any suitable number of convolutional layers, pooling layers, and the like to generate the features. For example, the hybrid machine-learning model can extract attributes from the input image data and can map the attributes to the features using one or more convolutional layers and, optionally, one or more pooling layers. The features can include features of the candidate symbol, or bounding box associated therewith, to which the image data corresponds.

The computing device 200 can use a subset of the hybrid machine-learning model to generate the representation vectors. For example, the computing device 200 can use the unsupervised layers, such as the layer 102d, to generate the representation vector corresponding to the candidate symbol and based on the generated features. Instead of a prediction layer, which is common among image classification neural networks, the hybrid machine-learning model may include and use an unsupervised layer, such as the output layer 102d, to transform the features into *N* dimensions in which *N* can be any suitable number, such as ranging from one to 100,000 or more. In some embodiments, the output layer 102d performs one or more mathematical operations on the generated features to generate N numerical representations corresponding to the features, thus projecting the features into *N* dimensions. The hybrid machine-learning model can concatenate or otherwise combine the N numerical representations corresponding to the features to generate the representation vector. In some embodiments, the representation vector includes an N x 1 matrix in which each row corresponds to a different numerical representation of the N numerical representations of the features. In some embodiments, multiple representation vectors may be combined, concatenated, or otherwise manipulated to generate a representation vector. For example, a mean vector may be generated from multiple representation vectors.

### Generating a labeled two-dimensional image

At block 640, a labeled two-dimensional image is generated. The representation vectors encoded for the candidate symbols at block 630 can be used to perform a comparison to determine labels to apply to the candidate symbols. For example, the computing device 200 can perform the comparison between a corresponding representation vector of the representation vectors encoded at block 630 and one or more representation vectors corresponding to one or more symbols included in a library of known symbols. In accordance with determining that the corresponding representation vector exceeds a threshold similarity with a particular representation vector of the one or more representation vectors, the computing device 200 can apply a first label to the corresponding candidate symbol in which the first label is a label of a first symbol that is represented by the particular representation vector. In some embodiments, the computing device 200 can generate a list of likely labels to apply to the candidate symbol in which the list includes potential labels corresponding to symbols of the library having representation vectors with a similarity score above the threshold similarity. Additionally or alternatively, and in accordance with determining that the corresponding representation vector does not exceed the threshold similarity with any representation vectors of the one or more representation vectors, the computing device 200 can apply a second label to the symbol in which the second label is provided by an entity associated with the two-dimensional image.

### Providing the labeled two-dimensional image

At block 650, the labeled two-dimensional image is provided. In some embodiments, providing the labeled two-dimensional image can involve outputting the labeled two-dimensional image on a graphical user interface, transmitting the labeled two-dimensional image to a separate computing device for automatically initiating the real-world operation, etc. In some embodiments, the real-world operation can include an acquisition operation for acquiring real-world items corresponding to the symbols included in the labeled two-dimensional image. In some embodiments, providing the labeled two-dimensional image can include outputting a graphical user interface that includes a list of labeled symbols and a count of each labeled symbol included in the list of labeled symbols. Additionally or alternatively, the graphical user interface can include one or more interactive elements that, when selected for a corresponding symbol of the list of labeled symbols, highlights each instance of the corresponding symbol in the labeled two-dimensional image.

Various features described herein, e.g., methods, apparatus, computer-readable media and the like, can be realized using a combination of dedicated components, programmable processors, and/or other programmable devices. Processes described herein can be implemented on the same processor or different processors. Where components are described as being configured to perform certain operations, such configuration can be accomplished, e.g., by designing electronic circuits to perform the operation, by programming programmable electronic circuits (such as microprocessors) to perform the operation, or a combination thereof. Further, while the embodiments described above may make reference to specific hardware and software components, those skilled in the art will appreciate that different combinations of hardware and/or software components may also be used and that particular operations described as being implemented in hardware might be implemented in software or vice versa.

Specific details are given in the above description to provide an understanding of the embodiments. However, it is understood that the embodiments may be practiced without these specific details. In some instances, well-known circuits, processes, algorithms, structures, and techniques may be shown without unnecessary detail in order to avoid obscuring the embodiments.

While the principles of the disclosure have been described above in connection with specific apparatus and methods, it is to be understood that this description is made only by way of example and not as limitation on the scope of the disclosure. Embodiments were chosen and described in order to explain the principles of the invention and practical applications to enable others skilled in the art to utilize the invention in various embodiments and with various modifications, as are suited to a particular use contemplated. It will be appreciated that the description is intended to cover modifications and equivalents.

Also, it is noted that the embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc.

A recitation of "a", "an", or "the" is intended to mean "one or more" unless specifically indicated to the contrary. Patents, patent applications, publications, and descriptions mentioned here are incorporated by reference in their entirety for all purposes. None is admitted to be prior art.

## Claims

1. A method comprising:
receiving image data representing a two-dimensional image;
extracting, using a trained detection service, a plurality of symbols from the image data, wherein each symbol of the plurality of symbols is extracted for a distinct symbol included in the two-dimensional image;
encoding the plurality of symbols to generate a plurality of representation vectors, wherein each representation vector of the plurality of representation vectors is an encoding of a different symbol of the plurality of symbols;
generating a labeled two-dimensional image, wherein generating the labeled two-dimensional image comprises, for each symbol of the plurality of symbols:
performing a comparison between a corresponding representation vector of the plurality of representation vectors and one or more representation vectors corresponding to one or more symbols included in a library of known symbols; and
in accordance with ascertaining that the corresponding representation vector exceeds a threshold similarity with a particular representation vector of the one or more representation vectors, applying a first label to the symbol, wherein the first label is a label of a symbol stored in the library and that is represented by the particular representation vector; or
in accordance with ascertaining that the corresponding representation vector does not exceed the threshold similarity with any representation vectors of the one or more representation vectors, applying a second label to the symbol of the plurality of symbols, wherein the second label is provided by an entity associated with the two-dimensional image; and
providing the labeled two-dimensional image for facilitating a real-world operation involving the two-dimensional image.

2. The method of claim 1, wherein encoding the plurality of symbols to generate the plurality of representation vectors comprises, for each symbol of the plurality of symbols:
generating, using one or more supervised layers of a hybrid machine-learning model, features based on image data corresponding to the symbol; and
generating, by using an unsupervised layer of the hybrid machine-learning model, the corresponding representation vector for the symbol by transforming the features into a predetermined number of numerical representations corresponding to the features.

3. The method of claim 1 or 2, wherein applying the second label to the symbol comprises adjusting the library of known symbols to include an association between the second label and the corresponding representation vector of the symbol.

4. The method of any one of the preceding claims, wherein the library of known symbols comprises a partitioned, cloud-based library, wherein each partition of a plurality of partitions included in the cloud-based library corresponds to a different tenant of a plurality of tenants, wherein applying the second label to the symbol comprises adjusting data within a particular partition of the plurality of partitions, and wherein the particular partition corresponds to a user associated with the two-dimensional image.

5. The method of any one of the preceding claims, wherein providing the labeled two-dimensional image comprises generating and outputting a graphical user interface that comprises a list of labeled symbols and a count of each labeled symbol included in the list of labeled symbols, and wherein the graphical user interface comprises one or more interactive elements that, when selected for a corresponding symbol of the list of labeled symbols, highlights each instance of the corresponding symbol in the labeled two-dimensional image.

6. The method of any one of the preceding claims, wherein extracting the plurality of symbols from the image data comprises generating a plurality of bounding boxes, wherein each bounding box of the plurality of bounding boxes corresponds with a different symbol of the plurality of symbols, and wherein each bounding box of the plurality of bounding boxes indicates a location of the different symbol within the two-dimensional image.

7. The method of claim 6, wherein encoding the plurality of symbols to generate the plurality of representation vectors comprises, for each symbol of the plurality of symbols, using a corresponding bounding box of the plurality of bounding boxes, and location indicated thereby, to encode the symbol into the corresponding representation vector.

8. The method of any one of the preceding claims, wherein extracting the plurality of symbols from the image data comprises:
dividing the two-dimensional image into a plurality of sub-images that have a smaller resolution than the two-dimensional image; and
applying the trained detection service to each sub-image of the plurality of sub-images to extract the plurality of symbols.

9. A system comprising:
a processing device; and
a non-transitory computer-readable medium comprising instructions executable by the processing device to cause the processing device to perform operations comprising:
receiving image data representing a two-dimensional image;
extracting, using a trained detection service, a plurality of symbols from the image data, wherein each symbol of the plurality of symbols is extractable for a distinct symbol included in the two-dimensional image;
encoding the plurality of symbols to generate a plurality of representation vectors, wherein each representation vector of the plurality of representation vectors is an encoding of a different symbol of the plurality of symbols;
generating a labeled two-dimensional image, wherein generating the labeled two-dimensional image comprises, for each symbol of the plurality of symbols:
performing a comparison between a corresponding representation vector of the plurality of representation vectors and one or more representation vectors corresponding to one or more symbols included in a library of known symbols;
in accordance with ascertaining that the corresponding representation vector exceeds a threshold similarity with a particular representation vector of the one or more representation vectors, applying a first label to the symbol, wherein the first label is a label of a symbol stored in the library and that is represented by the particular representation vector; or
in accordance with ascertaining that the corresponding representation vector does not exceed the threshold similarity with any representation vectors of the one or more representation vectors, applying a second label to the symbol of the plurality of symbols, wherein the second label is provided by an entity associated with the two-dimensional image; and
providing the labeled two-dimensional image for facilitating a real-world operation involving the two-dimensional image.

10. The system of claim 9, wherein the operation of encoding the plurality of symbols to generate the plurality of representation vectors comprises, for each symbol of the plurality of symbols:
generating, using one or more supervised layers of a hybrid machine-learning model, features based on image data corresponding to the symbol; and
generating, by using an unsupervised layer of the hybrid machine-learning model, a corresponding representation vector for the symbol by transforming the features into a predetermined number of numerical representations corresponding to the features.

11. The system of claim 9 or 10, wherein the operation of applying the second label to the symbol comprises adjusting the library of known symbols to include an association between the second label and the corresponding representation vector of the symbol.

12. The system of any one of claims 9-11, wherein the library of known symbols comprises a partitioned, cloud-based library, wherein each partition of a plurality of partitions included in the cloud-based library corresponds to a different tenant of a plurality of tenants, wherein the operation of applying the second label to the symbol comprises adjusting data within a particular partition of the plurality of partitions, and wherein the particular partition corresponds to a user associated with the two-dimensional image.

13. The system of any one of claims 9-12, wherein the operation of providing the labeled two-dimensional image comprises generating and outputting a graphical user interface that comprises a list of labeled symbols and a count of each labeled symbol included in the list of labeled symbols, and wherein the graphical user interface comprises one or more interactive elements that, when selected for a corresponding symbol of the list of labeled symbols, highlights each instance of the corresponding symbol in the labeled two-dimensional image.

14. The system of any one of claims 9-13, wherein the operation of extracting the plurality of symbols from the image data comprises generating a plurality of bounding boxes, wherein each bounding box of the plurality of bounding boxes corresponds with a different symbol of the plurality of symbols, and wherein each bounding box of the plurality of bounding boxes indicates a location of the different symbol within the two-dimensional image.

15. A non-transitory computer-readable medium comprising instructions executable by a processing device to cause the processing device to perform the method of any one of claims 1-8.
